## Europäisches Patentamt

## European Patent Office

## Office européen des brevets

(19)

(11) Veröffentlichungsnummer: **0 276 338**
**B1**

(12) # EUROPÄISCHE PATENTSCHRIFT

(45) Veröffentlichungstag der Patentschrift:
06.12.89

(51) Int. Cl.⁴: **G05B 19/40**, B23Q 5/56

(21) Anmeldenummer: 87101009.6

(22) Anmeldetag: 24.01.87

(54) Verfahren und Vorrichtung zur Ansteuerung eines mit einer Lose behafteten Stellgerätes.

(43) Veröffentlichungstag der Anmeldung:
03.08.88 Patentblatt 88/31

(45) Bekanntmachung des Hinweises auf die Patenterteilung:
06.12.89 Patentblatt 89/49

(84) Benannte Vertragsstaaten:
AT CH DE FR IT LI

(56) Entgegenhaltungen:
DD-A- 233 333
DE-B- 2 601 332
US-A- 3 560 830

(73) Patentinhaber: **CENTRA-BÜRKLE GMBH, Böblinger Strasse 17, D-7036 Schönaich(DE)**

(72) Erfinder: **Mann, Wolfgang, Dr., Hohewartstrasse 122, D-7000 Stuttgart 30(DE)**

(74) Vertreter: **Herzbach, Dieter et al, Honeywell Europe S.A. Holding KG Patent- und Lizenzabteilung Kaiserleistrasse 55 Postfach 184, D-6050 Offenbach am Main(DE)**

## Beschreibung

Die vorliegende Erfindung bezieht sich auf ein Verfahren zur Ansteuerung eines mit einer Lose behafteten Stellgerätes nach dem Gattungsbegriff des Patentanspruches 1 sowie auf eine Vorrichtung zur Durchführung dieses Verfahrens. Das erfindungsgemäße Verfahren findet insbesondere Anwendung bei einer Vorlauftemperaturregelung, bei der ein Stellglied, wie z.B. ein Mischventil von einem Stellmotor mit Getriebe angesteuert wird. Ein solches Getriebe weist ebenso wie die formschlüssige Ankopplung an das Stellglied, z.B. die Stellwelle eine Lose auf. Diese Lose führt zu einer Verschlechterung der Güte der Steuerung bzw. Regelung.

Aus der DE-B 2 601 332 ist ein Verfahren zur adaptiven Steuerung von Stellantrieben bekannt. Dort steuert ein Motor über ein mit einer Lose behaftetes Getriebe ein nicht-dargestelltes Stellglied an. Vor und hinter dem Getriebe sind Wandler angeordnet, die die Umdrehungen der Eingangs- und Ausgangswelle des Getriebes, z.B. in Impulse umsetzen, woraus sich die Lose insbesondere bei einer Drehrichtungsumkehr bestimmen läßt. Ein der Lose entsprechendes Signal wird abgespeichert und einem eventuellen Stellsignal additiv überlagert.

Ausgehend von diesem bekannten Verfahren ist es die Aufgabe der vorliegenden Erfindung, das der Lose entsprechende Signal auf einfache Weise zu gewinnen, ohne daß es Wandler oder Meßwertgeber bedarf. Die Lösung dieser Aufgabe gelingt gemäß den kennzeichnenden Merkmalen des Patentanspruches 1. Weitere vorteilhafte Ausgestaltungen des erfindungsgemäßen Verfahrens sowie einer Vorrichtung zur Durchführung dieses Verfahrens und eine zweckmäßige Verwendung sind den abhängigen Ansprüchen entnehmbar.

Mit Vorteil wird bei der vorliegenden Erfindung das Stellgerät anstelle mit einer Stellgröße mit einem Testisgnal beaufschlagt, das eine bestimmte Frequenz und eine veränderliche Amplitude aufweist. Ein der Amplitude des Testsignals proportionaler Wert wird als Kompensationsgröße für die Stellgerätelose festgehalten, wenn die Testsignalfrequenz erstmalig in der Regelgröße festgestellt wird.

Die selbsttätige Bestimmung der Stellgerätelose kann bei Inbetriebnahme der Regeleinrichtung erfolgen und in größeren Zeitabständen wiederholt werden. Die Testsignalaufschaltung kann auch bei eingeschaltetem Regler erfolgen.

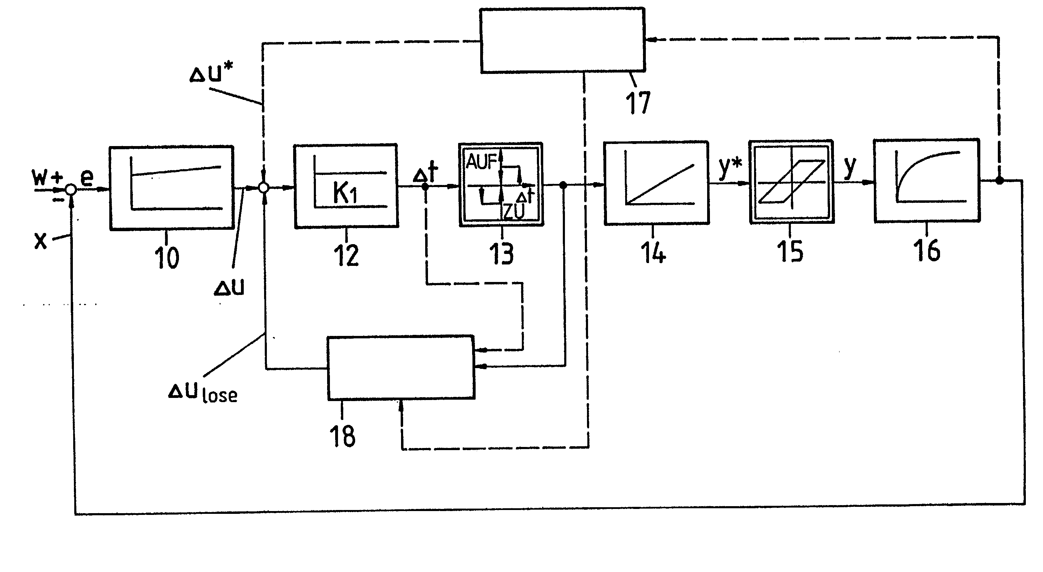

Anhand der einzigen Figur der beiliegenden Zeichnung sei im folgenden das erfindungsgemäße Verfahren anhand eines Ausführungsbeispieles einer Vorrichtung zur Durchführung dieses Verfahrens beschrieben.

Gemäß dieser einzigen Figur wird die durch einen Vergleich des Sollwertes w mit einem Istwert x gewonnene Regelabweichung e = w - x einem PI-Regler 10 zugeführt. Aufgrund der zugeführten Regelabweichung e gibt der Regler 10 eine Änderung der Stellgröße in Form eines Ausgangssignales $\Delta u$ aus. Im konkreten Ausführungsbeispiel ist der PI-Regler 10 digital realisiert, wobei folgender Regelalgorithmus verwirklicht wird:

$\Delta u(k) = K_R [e(k) - e(k-1) + T_O/T_N \cdot e(k-1)]$
herein bedeuten:

| $K_R$ | = | Reglerverstärkungsfaktor |
| $e(k)$ | = | Regelabweichung zum neuesten Abtastzeitpunkt |
| $e(k-1)$ | = | Regelabweichung des vergangenen (letzten) Abtastzeitpunktes |
| $T_O$ | = | Abtastzeit |
| $T_N$ | = | Nachstellzeit |
| $\Delta u(k)$ | = | neueste Änderung des Reglerausgangssignals. |

Das Reglerausgangssignal $\Delta u$ wird sodann einem Proportionalglied 12 zur Umrechnung der Stellgrößenänderung $\Delta u$ in eine Laufzeit $\Delta t$ des Stellmotors zugeführt. Die Eingangsgröße $\Delta u$ des Proportionalgliedes entspricht hierbei der Änderung des Reglerausgangssignales in Prozent und die Ausgangsgröße $\Delta t$ des Proportionalgliedes gibt die erforderliche Laufzeit des Stellmotors in Sekunden vor. Der Proportionalitätsfaktor des Proportionalgliedes 12 ist hierbei durch

$$K_1 = \frac{T_s \; /sec/}{100 \; /\%/}$$

vorgegeben, wobei $T_s$ der Stellzeit des Stellgliedes von 0 auf 100% entspricht.

Das von dem Proportionalglied 12 gelieferte Zeitsignal $\Delta t$ wird einem Dreipunktschalter 13 zugeführt, der ein Öffnungsrelais bzw. ein Schließrelais betätigen kann bzw. eine Neutralstellung einnehmen kann, wobei dies vorzeichen- und betragsabhängig geschieht.

Die entsprechenden Relais werden erst dann eingeschaltet, wenn

$$\sum_{i=k-j}^{k} \Delta t(i) > t_{min}$$

Dies bedeutet, daß je nach vorliegenden Verhältnissen $\Delta t$ j-mal (j=0,1...) aufsummiert werden muß bis die Mindesteinschaltzeit $\Delta t_{min}$ erreicht ist. Durch Vorgabe einer Mindesteinschaltzeit wird verhindert, daß die Relais zu häufig schalten; andererseits ist es von Vorteil für das tatsächliche Anlaufen des Motors eine solche Mindesteinschaltzeit vorzugeben.

Die Ausgangsgröße des Dreipunktschalters 13 wird einem Stellglied 14 mit integralem Verhalten zugeführt. Das Stellglied 14 liefert eine Ausgangsgröße y*, die die fiktive Stellung des Stellgliedes in Prozent vorgibt. Es handelt sich deswegen um eine fiktive Stellung, weil die in der Praxis auftretende Lose des Stellgliedes nicht berücksichtigt ist. Die Integrationskonstante des Stellgliedes 14 ist durch

$$K_I = \frac{100\ \underline{/\%\_7}}{T_S\ \underline{/sec\_7}}$$

vorgegeben, wobei $T_S$ die Stellzeit des Antriebes repräsentiert.

Wegen der durch einen Block 15 repräsentierten Stellgliedlose ergibt sich aufgrund der zugeführten Eingangsgröße y* eine Ausgangsgröße y, die der tatsächlichen Stellung des Stellgliedes in Prozent entspricht.

Mit diesem Wert wird die eigentliche Regelstrecke 16 beaufschlagt, die hier durch eine Vorlauftemperatur-Regelstrecke vorgegeben ist, welche näherungsweise das Verhalten eines Verzögerungsgliedes erster Ordnung zeigt. Aufgrund der der Regelstrecke 16 zugeführten Eingangsgröße y ergibt sich eine Ausgangsgröße x, die der gemessenen Vorlauftemperatur in Grad Celcius (Istwert) entspricht.

Soweit bis hierhin beschrieben, handelt es sich um eine bekannte Regelkreisanordnung. Um die Stellgliedlose zu bestimmen und zu berücksichtigen, ist ein Testsignalgenerator 17 angeordnet, der ein Testsignal $\Delta$ u* mit vorgebbarer Frequenz und veränderlicher Amplitude erzeugt. Dieses Testsignal $\Delta$ u* wird nunmehr dem Proportionalglied 12 zugeführt; gleichzeitig wird der Regler 10 und somit das Reglerausgangssignal $\Delta$ u abgetrennt. Zugleich wird der gemessene Vorlauftemperatur-Istwert x dem Testsignalgenerator 17 zugeführt, um die Amplitude des Testsignales $\Delta$ u* festzuhalten, wenn die Testsignalfrequenz in dem Regelgrößensignal, d.h. in dem Vorlauftemperatur-Istwert auftritt. Ein dieser Amplitude des Testsignales proportionaler Wert $\Delta$ u* wird in einer Einrichtung 18 abgespeichert, die zugleich in der Lage ist, eine befohlene Richtungsumkehr zu erkennen. Um diese Richtungsumkehr zu erkennen, wird das Signal hinter dem Dreipunktschalter 13 bzw. das Signal hinter dem Proportionalglied 12 der Einrichtung 18 zugeführt. Im Betrieb des Regelkreises wird der gespeicherte Wert des Testsignales als ein der Lose des Stellgliedes entsprechendes Signal $\Delta$ u$_{Lose}$ dann dem von dem PI-Regler 10 gelieferten Reglerausgangssignal $\Delta$ u additiv überlagert, wenn eine Richtungsumkehr des Stellgliedes befohlen wird.

Selbstverständlich kann von dem erfindungsgemäßen Verfahren auch dann Gebrauch gemacht werden, wenn das Stellglied nicht in einem geschlossenen Regelkreis, sondern in einem offenen Steuerkreis betrieben wird.

## Patentansprüche

1. Verfahren zur Ansteuerung eines mit einer Lose behafteten Stellgerätes, wobei ein der Lose entsprechendes Signal gespeichert und bei einer Stellrichtungsumkehr dem Stellsignal additiv überlagert wird, dadurch gekennzeichnet, daß zur selbsttätigen Ermittlung der Lose das Stellgerät anstelle einer Stellgröße ($\Delta$ u) mit einem Testsignal ($\Delta$ u*) vor-gegebener Frequenz und veränderlicher Amplitude beaufschlagt wird und daß beim Auftreten der Testsignalfrequenz in der überwachten Regelgröße (x) ein der Amplitude des Testsignales proportionaler Wert als Kompensationsgröße für die Stellgerätelose festgehalten wird.

2. Verfahren nach Anspruch 1, dadurch gekennzeichnet, daß die Ermittlung der Lose bei abgeschaltetem Regler erfolgt.

3. Vorrichtung zur Durchführung des Verfahrens nach Anspruch 1, gekennzeichnet durch einen Testsignalgenerator (17) zur Beaufschlagung des Stellgerätes (12–15) mit einem Signal vorgebbarer Frequenz und veränderlicher Amplitude und eine Einrichtung (18) zur Abspeicherung der Amplitude des Testsignales beim Auftritt der Testsignalfrequenz in der Regelgröße (x) und zur Erfassung einer Richtungsumkehr des Stellgerätes, um beim Auftritt einer Richtungsumkehr ein der Testsignalamplitude entsprechendes Signal ($\Delta$ U$_{LOSE}$) der vom Regler (10) gelieferten Stellgröße ($\Delta$ u) zu überlagern.

4. Anwendung des Verfahrens nach Anspruch 1 oder 2 bei der Vorlauftemperaturregelung mittels eines von einem Motor angetriebenen Mischventils.

5. Anwendung nach Anspruch 4, dadurch gekennzeichnet, daß die Laufzeit des Motors bei einer Richtungsumkehr entsprechend der Lose verlängert wird.

## Claims

1. A method for controlling a final control element having backlash, whereat a signal corresponding to said backlash is memorized and is additively superimposed to the servo output signal in the event where the driving direction is reversed, characterized in that for an atomatic evaluation of the backlash the final control element is driven by a test signal ($\Delta$ u*) of a predetermined frequency and of variable amplitude instead by the servo signal ($\Delta$ u) and that at the occurence of the test signal frequency within the monitored control variable (x) a value is taken as a compensation value for the backlash which is proportional to the amplitude of the test signal.

2. Method according to claim 1, characterized in that the backlash is evaluated when the controller is switched-off.

3. Apparatus for implementing the method according to claim 1, characterized by a test signal generator (17) for driving the control device (12–15) with a signal of predetermined frequency and of variable amplitude and by a device (18) for memorizing the amplitude of the test signal at the occurence of the test signal frequency within the control variable (x) and for determining the reversal of direction of the final control element in order to superimpose a signal ($\Delta$ U$_{LOSE}$) corresponding to the test signal amplitude at the reversal of direction to the servo signal ($\Delta$ u) delivered by the controller (10).

4. Application of the method according to claim 1 or 2 at the supply temperature control by means of a mixing valve driven by a motor.

5. Application according to claim 4, characterized in that the running time of the motor at a reversal of the direction is prolongated according to the backlash.

**Revendications**

1. Méthode pour contrôler un organe de commande ayant du jeu, un signal correspondant au jeu étant mémorisé et superposé en addition au signal de commande lors d'un changement de sens de commande, caractérisé en ce qu'il est appliqué à l'organe de commande en vue de la détection automatique de jeu, au lieu d'une grandeur de commande ($\Delta$ u), un signal d'essai ($\Delta$ u*) de fréquence prédéterminée et d'amplitude variable, et en ce que, lorsque se produit la fréquence de signal d'essai dans la grandeur de réglage surveillée (x), une valeur proportionnelle à l'amplitude du signal d'essai est retenue comme grandeur de compensation pour le jeu de l'organe de commande.

2. Procédé selon la revendication 1, caractérisé en ce que la détection du jeu est réalisée lorsque le mécanisme de régulation est hors circuit.

3. Dispositif pour mettre en œuvre la méthode selon la revendication 1, caractérisé par un générateur (17) de signal d'essai pour appliquer à l'organe de commande (12–15) un signal de fréquence prédéterminée et d'amplitude variable, et par un élément (1) de mémorisation de l'amplitude du signal d'essai lorsque se produit la fréquence de signal d'essai dans la grandeur de réglage (x) et pour saisir une inversion de sens de l'organe de commande pour superposer à la grandeur de commande ($\Delta$ U) provenant du mécanisme régulateur proportionnel et par intégration (10), lors d'une inversion de sens, un signal ($\Delta$ u$_{jeu}$) correspondant à l'amplitude du signal d'essai.

4. Application de la méthode selon la revendication 1 ou 2 lors du réglage de la température aller au moyen d'une valve de mélange entraînée par un moteur.

5. Application selon la revendication 4, caractérisé en ce que le temps de course du moteur est prolongé, lors d'une inversion de sens, pour correspondre au jeu.